# EUROPEAN PATENT SPECIFICATION

(11) **EP 2 787 024 B1**
(45) Date of publication and mention of the grant of the patent: **05.04.2017**
(21) Application number: 14152734.1
(22) Date of filing: 27.01.2014
(51) Int. Cl.: C08G 73/10, C09D 179/08

(54) **Thermosetting composition, hardened film and electronic component**
Wärmehärtende Zusammensetzung, gehärteter Film und elektronisches Bauteil
Composition thermodurcissable, film durci et composant électronique

(30) Priority: 28.01.2013 JP 2013013095
(43) Date of publication of application: 08.10.2014
(73) Proprietor: JNC Corporation, Chiyoda-ku Tokyo 100-8105 (JP)
(72) Inventor: Hirota, Takayuki, Ichihara-shi, Chiba 2908551 (JP); Anraku, Hiroshi, Ichihara-shi, Chiba 2908551 (JP); Kikuchi, Ayako, Ichihara-shi, Chiba 2908551 (JP); Sato, Hiroyuki, Ichihara-shi, Chiba 2908551 (JP)
(74) Representative: Wills, Andrew Jonathan

(56) References cited:
- EP-A1- 0 472 183
- EP-A1- 0 596 150
- EP-A2- 0 409 777
- EP-A2- 0 859 023
- WO-A1-93/13156
- JP-A- 2000 039 714
- JP-A- 2004 094 118
- JP-A- 2010 189 631
- US-A- 4 960 824
- US-A- 5 489 644

## Description

### Technical Field

The present invention relates to a thermosetting composition, a hardened film and an electronic component, and relates to a thermosetting composition comprising specific carboxylic acid ester and diamine, a hardened film obtained from the composition, and an electronic component having the hardened film.

More specifically, the invention relates a thermosetting composition, for example, used for forming an insulation film layer in manufacturing an electronic component, a hardened film obtained from the composition, and an electronic component having the hardened film.

### Background Art

In an electronics and communication field, a polyimide film is widely used for a reason of excellent heat resistance and electrical insulation (Patent literature Nos. 1 to 3).

Moreover, upon manufacturing a film, a solution coating method is employed in view of productivity and ease of film formation.

As a material upon forming the polyimide film by applying the solution coating method, various kinds of proposals have been made for a solution containing polyimide, a solution containing polyamide acid or the like that is converted into polyimide by curing (Patent literature Nos. 4 to 8).

Upon coating the solutions, use of a solution having viscosity allowing coating is required. However, any one of the solutions described in the Patent literatures contains a polymer having a high degree of polymerization, and therefore the viscosity is high, and a decrease in polymer concentration has been required for preparing a solution allowing coating.

However, the polymer having the high degree of polymerization has low solubility in a solvent. Therefore, even if a polymer concentration is decreased, preparation of a solution has been difficult, and even if preparation of a solution having a low polymer concentration has been allowed, storage stability for a long period of time has been low by precipitation of a polymer component, or the like, and film productivity has also decreased.

In order to solve such a problem, for example, a report has been made for a polyimide precursor dispersion liquid composed of a polyimide precursor including tetracarboxylic acid represented by a specific formula (and/or an ester derivative thereof) and diamine, and a solvent that does not dissolve the polyimide precursor (Patent literature No. 9).

### Citation List

### Patent Literature

Patent literature No. 1: JP 2000-039714 A.
Patent literature No. 2: JP 2003-238683 A.
Patent literature No. 3: JP 2004-094118 A.
Patent literature No. 4: JP 2009-221309 A.
Patent literature No. 5: JP 2009-120811 A.
Patent literature No. 6: JP 2010-189631 A.
Patent literature No. 7: JP S60-210630 A.
Patent literature No. 8: JP S59-164328 A.
Patent literature No. 9: JP 2000-290369 A.

### Summary of Invention

### Technical Problem

However, when a hardened film is formed using a dispersion liquid described in the Patent literature No. 9, a film surface has been found to be swollen in heat treatment, and difficult to obtain a hardened film having a flatness (being uniform in thickness). Moreover, when the dispersion liquid is used, difficulty has been found for obtaining a hardened film having characteristics similar to those of a hardened film obtained from a conventional composition containing polyimide or polyamide acid.

An object of the invention is to provide a thermosetting composition having low viscosity and excellent storage stability even when a solute concentration is high to allow formation of an excellent hardened film having a well balance among film flatness, heat resistance and mechanical characteristics.

### Solution to Problem

In order to solve the problem described above, the present inventors have diligently continued research. As a result, the present inventors have found that the problem can be solved by using a thermosetting composition comprising a specific carboxylic acid ester (A) and a diamine (B) as defined below, and have completed the invention. More specifically, the invention is as described below.

Item 1. A thermosetting composition comprising a compound (A) and a compound (B):
(A) carboxylic acid ester having at least one group represented by formula (1); and
(B) diamine as defined below: 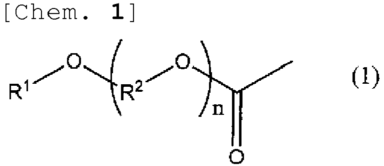
wherein, in formula (1), R¹ is alkyl having 1 to 10 carbons, R² is independently alkylene having 2 or 3 carbons, and n is an integer from 1 to 3.

Item 2. The thermosetting composition according to item 1, wherein carboxylic acid ester (A) is obtained by allowing a carboxylic anhydride (a1) to react with a compound (a2) represented by formula (2): 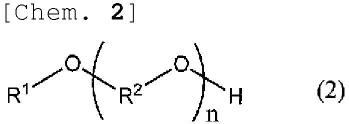 wherein, in formula (2), R¹ is alkyl having 1 to 10 carbons, R² is independently alkylene having 2 or 3 carbons, and n is an integer from 1 to 3.

Item 3. The thermosetting composition according to item 2, wherein carboxylic anhydride (a1) is at least one kind of compound selected from the group of a tetracarboxylic anhydride, and a dicarboxylic anhydride having a thermo-reactive unsaturated bond.

Item 4. The thermosetting composition according to item 2 or 3, wherein carboxylic anhydride (a1) is at least one kind of compound selected from the group of 3,3',4,4'-biphenyl tetracarboxylic dianhydride, pyromellitic dianhydride, 3,3',4,4'-benzophenone tetracarboxylic dianhydride, 2,2',3,3'-benzophenone tetracarboxylic dianhydride, 2,3,3',4'-benzophenone tetracarboxylic dianhydride, 3,3',4,4'-diphenylsulfone tetracarboxylic dianhydride, 2,2',3,3'-diphenylsulfone tetracarboxylic dianhydride, 2,3,3',4'-diphenylsulfone tetracarboxylic dianhydride, 3,3',4,4'- diphenylether tetracarboxylic dianhydride, 2,2',3,3'-diphenylether tetracarboxylic dianhydride, 2,3,3',4'-diphenylether tetracarboxylic dianhydride, 2,2-[bis(3,4-dicarboxyphenyl)]hexafluoropropane dianhydride, ethyleneglycol bis (anhydrotrimellitate), 4,4'-[(isopropylidene)bis(p-phenyleneoxy)]diphthalic dianhydride, cyclobutane tetracarboxylic dianhydride, methylcyclobutane tetracarboxylic dianhydride, cyclopentane tetracarboxylic dianhydride, 1,2,4,5-cyclohexane tetracarboxylic dianhydride, ethane tetracarboxylic dianhydride, butane tetracarboxylic dianhydride, 3,3',4,4'-bicyclohexyl tetracarboxylic dianhydride, 4-ethynyl phthalic anhydride and 4-phenylethynyl phthalic anhydride.

Item 5. The diamine (B) is at least one kind of compound selected from the group of 3,3'-diaminodiphenylsulfone, 4,4'-diaminodiphenyl ether, bis[4-(3-aminophenoxy)phenyl]sulfone, 3,3'-diaminodiphenylmethane, 4,4'-diaminodiphenylmethane, 2,2'-diaminodiphenylpropane, 3,3'-dimethyl-4,4'-diaminodiphenylmethane, 2,2-bis[4-(4-aminophenoxy)phenyl]propane, 2,2-bis[4-(4-aminophenoxy)phenyl]hexafluoropropane, m-phenylenediamine, p-phenylenediamine, m-xylylenediamine, p-xylylenediamine, benzidine, 1,1-bis[4-(4-aminophenoxy)phenyl]cyclohexane, 1,1-bis[4-(4-aminophenoxy)phenyl]-4-methylcyclohexane, 1,1-bis[4-(4-aminobenzyl)phenyl]cyclohexane, 1,1-bis[4-(4-aminobenzyl)phenyl]-4-methylcyclohexane, 1,1-bis[4-(4-aminobenzyl)phenyl]methane, 1,3-bis(4-aminophenoxy)benzene, 3,3'-dimethoxybenzidine, and 3,3' -dihydroxybenzidine.

Item 6. The thermosetting composition according to any one of items 1 to 5, further comprising a solvent (C).

Item 7. A hardened film, obtained by hardening the thermosetting composition according to any one of items 1 to 6.

Item 8. An electronic component having the hardened film according to item 7.

### Advantageous Effects of Invention

According to the invention, a thermosetting composition having low viscosity and excellent storage stability even when a solute concentration is high to allow formation of an excellent hardened film having a well balance among film flatness, heat resistance, mechanical characteristics and so forth can be obtained.

### Description of Embodiments

### 1. Thermosetting composition

A thermosetting composition according to the invention (hereinafter, also referred to simply as "a composition of the invention") is not particularly limited, if the thermosetting composition comprises a specific carboxylic acid ester (A) and the diamine (B).

The composition of the invention comprises the carboxylic acid ester (A) and the diamine (B) as described above, and not polyimide or polyamide acid, and therefore forms a thermosetting composition having low viscosity and excellent storage stability even when a solute concentration is high to allow formation of an excellent hardened film having a well balance among film flatness, heat resistance, mechanical characteristics and so forth.

"Solute concentration" in the invention refers to a concentration of a component in the composition of the invention that can form a polymer in the hardened material on forming a hardened material from the composition.

The composition of the invention may also comprise, when necessary, a solvent and an additive in the range in which advantageous effects of the invention are not adversely affected. The composition of the invention may be either colorless or colored.

### 1-1. Carboxylic acid ester (A)

Carboxylic acid ester (A) (hereinafter, also referred to as "component (A)") has at least one group represented by formula 1 below.

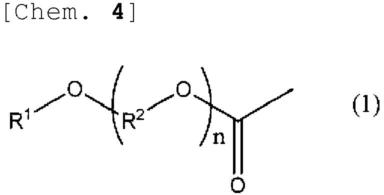

In formula (1), R¹ is alkyl having 1 to 10 carbons, R² is independently alkylene having 2 or 3 carbons, and n is an integer from 1 to 3.

Carboxylic anhydride has been so far used in place of specific carboxylic acid ester (A). However, the carboxylic anhydride ordinarily reacts with diamine (B) even at room temperature, and therefore properties have changed or a polymerized polymer has precipitated during storage of the composition in some cases. Consequently, such a composition has required frozen storage.

On the other hand, according to the invention, the thermosetting composition comprises the specific carboxylic acid ester (A) therein, and therefore forms a composition having the advantageous effects described above, in particular, a composition having excellent storage stability and ease of storage at room temperature.

The carboxylic acid ester (A) is preferably a compound obtained by allowing a carboxylic anhydride (a1) to react with a compound (a2).

### 1-1-1. Carboxylic anhydride (a1)

Carboxylic anhydride (a1) is not particularly restricted, and is preferably carboxylic anhydride containing an aromatic ring. In view of capability of obtaining an excellent hardened film having a well balance among film flatness, heat resistance, mechanical characteristics and so forth, carboxylic anhydride (a1) is further preferably a tetracarboxylic anhydride and/or a dicarboxylic anhydride having a thermo-reactive unsaturated bond, and still further preferably, a compound that can be dissolved in compound (a2).

Carboxylic anhydride (a1) may be used alone in one kind or in combination with two or more kinds.

Moreover, tetracarboxylic anhydride and dicarboxylic anhydride having the thermo-reactive unsaturated bond may be simultaneously used. When the materials are simultaneously used as carboxylic anhydride (a1), crosslinking is caused between polyimide chains to allow formation of a hardened film having superb heat resistance and mechanical characteristics.

### 1-1-1-1. Dicarboxylic anhydride having a thermo-reactive unsaturated bond

Dicarboxylic anhydride having a thermo-reactive unsaturated bond is not particularly restricted.

Specific examples of the group having the thermo-reactive unsaturated bond include a group having a polymerizable double bond, an ethynyl group, a propa-2-yn-1-yl group and a buta-3-yn-1-yl group, and preferably, an ethynyl group in view of crosslinking reactivity, heat resistance of the resulting hardened material and so forth.

Specific examples of the dicarboxylic anhydride having the thermo-reactive unsaturated bond include 4-ethynyl phthalic anhydride (abbreviation: 4-EPA), 4-phenylethynyl phthalic anhydride, maleic anhydride, citraconic anhydride, itaconic anhydride, allylnadic anhydride, 5-norbornene-2,3-dicarboxylic anhydride, cyclohexene-1,2-dicarboxylic anhydride, exo-3,6-epoxy-1,2,3,6-tetrahydrophthalic anhydride and allyl succinic anhydride.

Among the compounds, 4-ethynyl phthalic anhydride is preferred in view of being dissolved in compound (a2) and having capability of obtaining an excellent hardened film having a well balance among film flatness, heat resistance, mechanical characteristics and so forth.

### 1-1-1-2. Tetracarboxylic anhydride

Specific examples of the tetracarboxylic anhydride include 3,3',4,4'-biphenyltetracarboxylic dianhydride (abbreviation: s-BPDA), pyromellitic dianhydride (abbreviation: PMDA), 3,3',4,4'-benzophenone tetracarboxylic dianhydride, 2,2',3,3'-benzophenone tetracarboxylic dianhydride, 2,3,3',4'-benzophenone tetracarboxylic dianhydride, 3,3',4,4'-diphenylsulfone tetracarboxylic dianhydride, 2,2',3,3'-diphenylsulfone tetracarboxylic dianhydride, 2,3,3',4'-diphenylsulfone tetracarboxylic dianhydride, 3,3',4,4'-diphenyl ether tetracarboxylic dianhydride (abbreviation: ODPA), 2,2',3,3'-diphenyl ether tetracarboxylic dianhydride, 2,3,3',4'-diphenyl ether tetracarboxylic dianhydride, 2,2-[bis(3,4-dicarboxyphenyl]hexafluoropropane dianhydride, ethyleneglycol bis(anhydrotrimellitate), 4,4'-[(isopropylidene)bis(p-phenyleneoxy)]diphthalic dianhydride, cyclobutane tetracarboxylic dianhydride, methylcyclobutane tetracarboxylic dianhydride, cyclopentane tetracarboxylic dianhydride, 1,2,4,5-cyclohexane tetracarboxylic dianhydride, ethane tetracarboxylic dianhydride, butane tetracarboxylic dianhydride and 3,3',4,4'-bicyclohexyl tetracarboxylic dianhydride.

Among the compounds, in view of being dissolved in compound (a2) and having capability of obtaining an excellent hardened film having a well balance among film flatness, heat resistance, mechanical characteristics and so forth, 3,3',4,4'-biphenyltetracarboxylic dianhydride (abbreviation: s-BPDA), pyromellitic dianhydride (abbreviation: PMDA) or 3,3',4,4'-diphenyl ether tetracarboxylic dianhydride (abbreviation : ODPA) is preferred.

### 1-1-2. Compound (a2)

Compound (a2) is represented by formula (2) below.

When such compound (a2) is used, a thermosetting composition that can form an excellent hardened film having a well balance among film flatness, heat resistance, mechanical characteristics and so forth can be obtained.

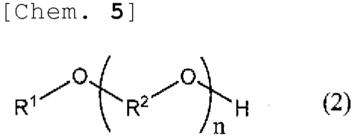

In formula (2), R¹ is alkyl having 1 to 10 carbons, R² is independently alkylene having 2 or 3 carbons, and n is an integer from 1 to 3.

R¹ is preferably alkyl having 1 to 6 carbons, and further preferably, alkyl having 1 to 4 carbons in view of capability of easily synthesizing carboxylic acid ester (A) and capability of obtaining a composition that can form an excellent hardened film having a well balance among film flatness, heat resistance, mechanical characteristics and so forth.

The alkyl may be a straight chain or a branched chain, but preferably, a straight chain.

When n is 2 or more, a plurality of R² present may be independently identical or different with each other. The description applies to a compound represented by any other formula in a same manner.

R² is preferably alkylene having 2 carbons.

The alkylene may be a straight chain or a branched chain, but preferably, a straight chain.

n is preferably 2 or 3, and further preferably, 2 in view of capability of easily synthesizing carboxylic acid ester (A) and capability of obtaining a composition that can form an excellent hardened film having a well balance among film flatness, heat resistance, mechanical characteristics and so forth.

Compound (a2) preferably has a predetermined relationship for structure thereof and a boiling point.

As the structure, compound (a2) preferably includes a straight-chain compound as represented by formula (2). As the boiling point, compound (a2) preferably has approximately 100 to approximately 260°C, and further preferably, approximately 120 to approximately 240°C.

The composition of the invention comprises carboxylic acid ester (A), and the carboxylic acid ester (A) is preferably a compound obtained by allowing a carboxylic anhydride (a1) to react with a compound (a2). Esterification thereof ordinarily requires a certain degree of temperature. Use of compound (a2) having a low boiling point does not allow the reaction at a high temperature. Therefore, unless compound (a2) is allowed to react at low temperature for long time, carboxylic acid ester (A) may not be synthesized and the composition may not be obtained with satisfactory productivity at the time of its preparation.

Moreover, the composition of the invention is preferably heated to cause imidization, and thus used. On the occasion, a component derived from compound (a2) is ordinarily eliminated from carboxylic acid ester (A), and the component volatilizes. The imidization is performed under a certain degree of high temperature. Therefore, if a boiling point of an eliminated component is low, the component may occasionally volatilize rapidly during forming the hardened material to cause swelling of the hardened material, resulting in generation of a defect derived from a foam or a bubble to the hardened material.

On the other hand, if a boiling point of the eliminated component is high, the component does not volatile and remains in the hardened material in a process of imidization, and therefore further heating may be occasionally required to cause poor productivity of the hardened film.

Therefore, the boiling point of compound (a2) is preferably within the range described above. However, even when alcohol having the boiling point within the range described above does not have the structure represented by formula (2), such a compound tends not to produce advantageous effects of the invention.

For example, even when e.g. alcohol having a branch does not have the structure represented by formula (2), such a compound may occasionally have the boiling point may in the range described above. However, when such a compound is used, synthesis of carboxylic acid ester (A) is quite difficult, and elimination of a component derived from the alcohol becomes difficult from carboxylic acid ester (A). Therefore, such a compound tends not to allow obtaining a hardened material having desired characteristics, such as characteristics of a conventional polyimide film.

Specific examples of compound (a2) include ethylene glycol monomethyl ether, ethylene glycol monoethyl ether, ethylene glycol monopropyl ether, ethylene glycol monobutyl ether, ethylene glycol monopentyl ether, ethylene glycol monohexyl ether, ethylene glycol monoheptyl ether, ethylene glycol monooctyl ether, ethylene glycol monononyl ether, diethylene glycol monomethyl ether, diethylene glycol monoethyl ether (ethylcarbitol, abbreviation: ECa), diethylene glycol monopropyl ether, diethylene glycol monobutyl ether, diethylene glycol monopentyl ether, diethylene glycol monohexyl ether, diethylene glycol monoheptyl ether, diethylene glycol monooctyl ether, diethylene glycol monononyl ether, triethylene glycol monomethyl ether, triethylene glycol monoethyl ether, triethylene glycol monopropyl ether, triethylene glycol monobutyl ether, triethylene glycol monopentyl ether, triethylene glycol monohexyl ether, triethylene glycol monoheptyl ether, triethylene glycol monooctyl ether, triethylene glycol monononyl ether, propylene glycol monomethyl ether, propylene glycol monoethyl ether, propylene glycol monopropyl ether, propylene glycol monobutyl ether, propylene glycol monopentyl ether, propylene glycol monohexyl ether, propylene glycol monoheptyl ether, propylene glycol monooctyl ether, propylene glycol monononyl ether, dipropylene glycol monomethyl ether, dipropylene glycol monoethyl ether, dipropylene glycol monopropyl ether, dipropylene glycol monobutyl ether, dipropylene glycol monopentyl ether, dipropylene glycol monohexyl ether, dipropylene glycol monoheptyl ether, dipropylene glycol monooctyl ether, dipropylene glycol monononyl ether, tripropylene glycol monomethyl ether, tripropylene glycol monoethyl ether, tripropylene glycol monopropyl ether, tripropylene glycol monobutyl ether, tripropylene glycol monopentyl ether, tripropylene glycol monohexyl ether, tripropylene glycol monoheptyl ether, tripropylene glycol monooctyl ether and tripropylene glycol monononyl ether.

Among the compounds, diethylene glycol monoethyl ether is preferred in view of capability of easily synthesizing carboxylic acid ester (A) and capability of obtaining a composition that can form an excellent hardened film having a well balance among film flatness, heat resistance, mechanical characteristics and so forth.

### 1-1-3. Conditions for synthesizing carboxylic acid ester (A)

Carboxylic acid ester (A) can be preferably obtained by allowing an acid anhydride group in carboxylic anhydride (a1) to react with a hydroxyl group in compound (a2).

When the total number of moles of the acid anhydride group in carboxylic anhydride (a1) is taken as α and the total number of moles of the hydroxyl group in compound (a2) is taken as β, a use ratio of compound (a2) to carboxylic anhydride (a1) in the reaction is preferably 1 or more in terms of β/α in view of capability of obtaining a composition that has excellent stability and can form a hardened material having a well balance among film flatness, heat resistance, mechanical characteristics and so forth.

A reaction temperature in the reaction is ordinarily approximately 60 to approximately 160°C, and preferably, approximately 70 to approximately 160°C. Reaction time is ordinarily approximately 0.5 to approximately 10 hours, and preferably, approximately 0.5 to approximately 8 hours, and a reaction pressure is under a normal pressure, for example.

### 1-2. Diamine (B)

Diamine (B) may be used alone in one kind or in combination with two or more kinds.

Diamine (B) is selected from 3,3'-diaminodiphenylsulfone (abbreviation: DDS), 4,4'-diaminodiphenyl ether (abbreviation: DDE), bis[4-(3-aminophenoxy)phenyl]sulfone (abbreviation: BAPS-M), 3,3'-diaminodiphenylmethane, 4,4'-diaminodiphenylmethane, 2,2'-diaminodiphenyl propane, 3,3'-dimethyl-4,4'-diaminodiphenylmethane, 2,2-bis[4-(4-aminophenoxy)phenyl]propane (abbreviation: BAPP), 2,2-bis[4-(4-aminophenoxy)phenyl]hexafluoropropane (abbreviation: HFBAPP), m-phenylenediamine, p-phenylenediamine, m-xylylenediamine, p-xylylenediamine, benzidine, 1,1-bis[4-(4-aminophenoxy)phenyl]cyclohexane, 1,1-bis[4-(4-aminophenoxy)phenyl]-4-methylcyclohexane, 1,1-bis[4-(4-aminobenzyl)phenyl]cyclohexane, 1,1-bis[4-(4-aminobenzyl)phenyl]-4-methylcyclohexane, 1,1-bis[4-(4-aminobenzyl)phenyl]methane, 1,3-bis(4-aminophenoxy)benzene (abbreviation: TPE-R), diethylene glycol bis(3-aminopropyl)ether, 3,3'-dimethoxybenzidine (abbreviation: DMB), 3,3'-dihydroxybenzidine

Diamine (B) preferably includes DDS, DDE, BAPS-M, BAPP, HFBAPP, TPE-R and DMB in view of capability of obtaining a composition that can form an excellent hardened film having a well balance among film flatness, heat resistance, mechanical characteristics and so forth.

### 1-3. Content of components (A) and (B)

When the total number of moles of a group represented by formula (1) in component (A), and a carboxyl group and an acid anhydride group that may be included in component (A) is taken as N' , and the total number of moles of an amino group in component (B) is taken as M, components (A) and (B) are desirably contained, in terms of N'/M, to be in a ratio of preferably approximately 0.5 to approximately 5, and further preferably, approximately 0.75 to approximately 4.5 in the composition of the invention.

Moreover, when component (A) is a compound obtained by allowing a carboxylic anhydride (a1) to react with a compound (a2), when the total number of moles of an acid anhydride group of carboxylic anhydride (a1) used is taken as N, and the total number of moles of an amino group in component (B) is taken as M, components (A) and (B) are desirably contained, in terms of N/M, in a ratio of preferably approximately 0.75 to approximately 1.25, and further preferably, approximately 0.9 to approximately 1.1 in the composition of the invention.

The case where the content of components (A) and (B) is in the range described above is preferred in view of a small amount of unreacted components (A) and (B) remaining in the hardened film upon forming the hardened film from the composition of the invention, and favorable characteristics of the hardened film obtained.

### 1-4. Solvent (C)

The composition of the invention may comprise, when necessary, a solvent (C) for adjusting the solute concentration, the viscosity or the like.

Such solvent (C) preferably includes a solvent that can dissolve components (A) and (B) in view of capability of obtaining a composition having excellent storage stability.

If a boiling point of solvent (C) is too low, film flatness of the hardened film obtained may occasionally decrease, and if a boiling point is too high, the solvent remains in the hardened film obtained, and film characteristics may decrease. Consequently, the boiling point of solvent (C) is preferably in the range of approximately 90 to approximately 300°C, and further preferably, in the range of approximately 100 to approximately 280°C.

Specific examples of solvent (C) include dimethyl sulfoxide, 1-methyl-2-pyrrolidone, N,N-dimethylformamide, N,N-dimethylacetamide, N,N-diethylacetamide, N,N-dimethylpropionamide, diethylene glycol ethyl methyl ether, triethylene glycol dimethyl ether, γ-butyrolactone, ethylene glycol, propylene glycol, glycerol, ethylene glycol monomethyl ether, ethylene glycol monobutyl ether, ethylene glycol monophenyl ether, ethylene glycol dimethyl ether, ethylene glycol monomethyl ether acetate, ethylene glycol monoethyl ether acetate, diethylene glycol monomethyl ether, diethylene glycol monobutyl ether, diethylene glycol diethyl ether, diethylene glycol dibutyl ether, diethylene glycol isopropylmethyl ether, diethylene glycol butyl methyl ether, diethylene glycol monoethyl ether acetate, triethylene glycol monomethyl ether, triethylene glycol divinyl ether, propylene glycol monomethyl ether(1-methoxy-2-propanol), propylene glycol monoethyl ether(1-ethoxy-2-propanol), propylene glycol monobutyl ether(1-butoxy-2-propanol), propylene glycol dimethyl ether, propylene glycol monomethyl ether acetate, dipropylene glycol monomethyl ether, dipropylene glycol dimethyl ether, tripropyllene glycol monomethyl ether, tripropylene glycol dimethyl ether, α-acetyl-γ-butyrolactone, ε-caprolactone, γ-hexanolactone, δ-hexanolactone, methylethyl sulfoxide and diethylsulfoxide.

Solvent (C) may be used alone in one kind or by mixing two or more kinds.

The content of solvent (C) may be appropriately determined depending on a use of the composition of the invention and a coating method, and is preferably in the range of approximately 20 to approximately 95% by weight, and further preferably, approximately 30 to approximately 90% by weight, based on 100% by weight of the composition of the invention in view of storage stability or the like.

### 1-5. Additive

The composition of the invention may comprise, depending on objective characteristics, an additive other than component (A), component (B) and solvent (C) within the range in which advantageous effects of the invention are not adversely affected. Specific examples of such an additive include a macromolecular compound, an epoxy compound, an acrylic resin, a surfactant, an antistatic agent, a coupling agent, an epoxy curing agent, a pH adjuster, an anti-rust agent, a preservative, a anti-mold agent, anantioxidant, a reduction inhibitor, an evaporation accelerator, a chelating agent, a water-soluble polymer, a pigment, titanium black, carbon black and a dye. The additives may be appropriately used alone in one kind or in combination with two or more kinds depending on objective characteristics.

### 1-5-1. Macromolecular compound

The macromolecular compound is not particularly limited. Specific examples include polyamide acid, soluble polyimide, polyamide, polyamideimide, polyamide acid ester, polyester, polyvinyl alcohol and polyoxyethylene. The macromolecular compound may be used alone in one kind or in combination with two or more kinds.

In view of excellent solubility, a weight average molecular weight of the macromolecular compound is preferably in the range of approximately 1,000 to approximately 200,000, further preferably, in the range of approximately 1,000 to approximately 180,000, still further preferably, in the range of approximately 1,000 to approximately, 160, 000, and particularly preferably, in the range of approximately 1,000 to approximately 150,000.

When a macromolecular compound having a weight average molecular weight in the range of approximately 1,000 or more is used, the macromolecular compound is not evaporated upon forming the hardened film from the composition of the invention, and thus a chemically and mechanically stable hardened film is obtained.

The weight average molecular weight of the macromolecular compound can be measured according to a gel permeation chromatography (GPC) method.

The concentration of the macromolecular compound in the composition of the invention is ordinarily in the range of approximately 0 to approximately 20% by weight, and preferably, in the range of approximately 0 to approximately 10% by weight. When the macromolecular compound is within such a concentration range, a hardened film having good film flatness, heat resistance and mechanical characteristics tends to be obtained.

### 1-5-2. Epoxy compound

The epoxy compound is not particularly limited, if the epoxy compound has an oxirane group or an oxetane group. A compound having two or more oxirane groups is preferred.

According to the invention, even when a polymer has an acryloyl group or a methacryloyl group, a polymer formed from a monomer containing an oxirane group or an oxetane group is referred to as an epoxy compound, and alkoxysilanes containing an oxirane group or an oxetane group are also referred to an epoxy compound.

The case where the composition of the invention comprises the epoxy compounds is preferred because a hardened film having excellent heat resistance is obtained.

Specific examples of the epoxy compound include a bisphenol A epoxy compound, a glycidyl ester epoxy compound, an alicyclic epoxy compound, a polymer of a monomer having an oxirane group or an oxetane group, and a copolymer of a monomer having an oxirane group or an oxetane group and any other monomer.

Specific examples of the monomer having an oxirane group or an oxetane group include glycidyl (meth)acrylate, methyl glycidyl (meth)acrylate, 3,4-epoxycyclohexyl (meth)acrylate, (3-ethyl-3-oxetanyl)methyl (meth)acrylate, 3-ethyl-3-(meth)acryloxy methyl oxetane, 3-methyl-3-(meth)acryloxy ethyl oxetane, 3-ethyl-3-(meth)acryloxy ethyl oxetane, 3-methyl-3-(meth)acryloxy methyl oxetane, 2-phenyl-3-(meth)acryloxy methyl oxetane, 2-trifluoromethyl-3-(meth)acryloxy methyl oxetane and 4-trifluoromethyl-2-(meth)acryloxy methyl oxetane.

Specific examples of any other monomer to be copolymerized with the monomer having an oxirane group or an oxetane group include (meth)acrylic acid, methyl (meth)acrylate, ethyl (meth)acrylate, isopropyl (meth)acrylate, n-butyl (meth)acrylate, iso-butyl (meth)acrylate, tert-butyl (meth)acrylate, cyclohexyl (meth)acrylate, benzyl (meth)acrylate, 2-hydroxyethyl (meth)acrylate, 2-hydroxypropyl (meth)acrylate, styrene, methylstyrene, chloromethylstyrene, (3-ethyl-3-oxetanyl)methyl (meth)acrylate, N-cyclohexylmaleimide and N-phenylmaleimide.

Preferred specific examples of the polymer of the monomer having an oxirane group or an oxetane group, and the copolymer of the monomer having an oxirane group or an oxetane group and any other monomer include polyglycidyl (meth) acrylate, a methyl (meth)acrylate-glycidyl (meth)acrylate copolymer, a benzyl (meth)acrylate-glycidyl (meth)acrylate copolymer, a n-butyl (meth)acrylate-glycidyl (meth)acrylate copolymer, a 2-hydroxyethyl (meth)acrylate-glycidyl (meth)acrylate copolymer, a (3-ethyl-3-oxetanyl)methyl (meth)acrylate-glycidyl (meth)acrylate copolymer and a styrene-glycidyl (meth)acrylate copolymer.

Specific examples of the alkoxysilanes having the oxirane group or the oxetane group include γ-glycidoxypropylmethyldimethoxysilane, γ-glycidoxypropyltrimethoxysilane, γ-glycidoxypropylmethyldiethoxysilane and γ-glycidoxypropyltriethoxysilane.

Specific examples of the epoxy compounds include "jER 807," "jER 815," "jER 825," "jER 827," "jER 828," "jER 190P, " "jER 191P," "jER 1004" and "jER 1256" (trade names) (Mitsubishi Chemical Corporation), "Araldite CY177" and "Araldite CY184" (trade names) (Huntsman Japan K.K.), "Celloxide 2021P," "Celloxide 3000" and "EHPE-3150" (trade names) (Daicel Chemical Industries, Ltd.), "Techmore VG3101L" (trade name) (Printec Corporation), N,N,N',N'-tetraglycidyl-m-xylenediamine, 1,3-bis(N,N-diglycidylaminomethyl)cyclohexane and N,N,N',N'-tetraglycidyl-4,4'-diaminodiphenylmethane. Among the compounds, use of Araldite CY184, Celloxide 2021P, Techmore VG3101L or jER 828 is preferred because a hardened film having a particularly good film flatness is obtained.

Specific examples of the epoxy compounds further include compounds represented by formula (I) to formula (VI) below. Among the compounds, compounds represented by formulas (I), (V) and (VI) below are preferred because a hardened film having a particularly good film flatness is obtained.

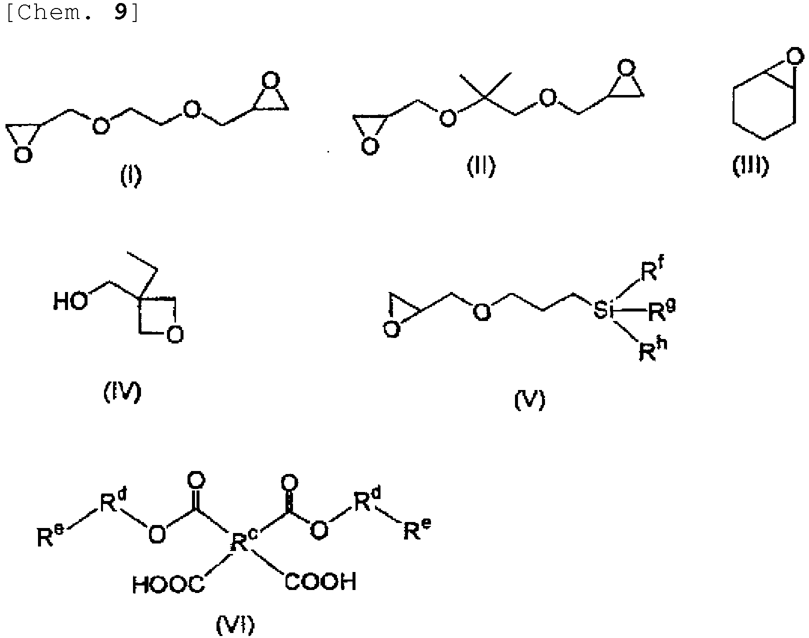

In formula (V), R^{f}, R^{g} and R^{h} are each independently hydrogen or an organic group having 1 to 30 carbons. Specific examples of the organic group having 1 to 30 carbons include a hydrocarbon group having 1 to 30 carbons.

In formula (VI), R^{c} is an organic group having 2 to 100 carbons. Specific examples of the organic group having 2 to 100 carbons include a hydrocarbon group having 2 to 100 carbons or a group including an aromatic group having 6 to 40 carbons.

In formula (VI), R^{d} is independently an organic group having 1 to 30 carbons. Specific examples of the organic group having 1 to 30 carbons include a straight-chain or branched hydrocarbon group having 1 to 30 carbons, and preferably, a hydrocarbon group having 1 to 30 carbons that may include a ring structure or oxygen. Specific examples of the ring structure include phenyl, cyclohexyl, naphthyl, cyclohexenyl and tricyclo[5.2.1.0^{2,6}]decanyl.

In formula (VI), R^{e} is independently an organic group having oxetane, oxirane or 1,2-epoxycyclohexane, and preferably, an organic group selected from the group of formulas (VII) to (IX) below.

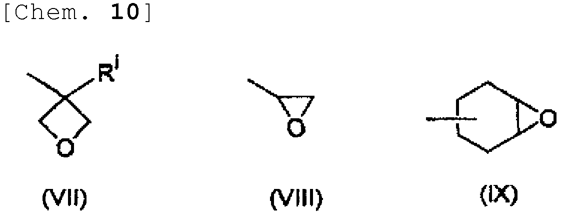

In formula (VII), Rⁱ is hydrogen or alkyl having 1 to 3 carbons.

Preferred examples of the compounds represented by formula (VI) include a compound represented by formula (X) below.

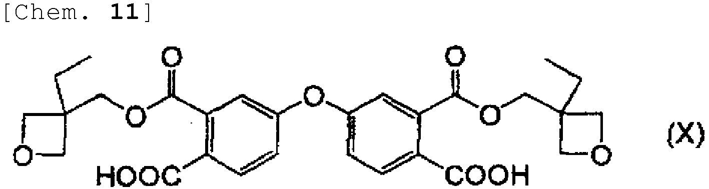

The epoxy compound may be used alone in one kind or in combination with two or more kinds.

When the epoxy compound is contained in the composition of the invention, the concentration of the epoxy compound in the composition is not particularly limited, but is preferably in the range of approximately 0.1 to approximately 20% by weight, and further preferably, in the range of approximately 1 to approximately 10% by weight. When the concentration is within the range described above, film flatness, heat resistance and mechanical characteristics of the hardened film obtained become good.

### 1-5-3. Acrylic resin

The acrylic resin is not particularly limited, when the acrylic resin is a polymer having an acryloyl group or a methacryloyl group. Specific examples include a homopolymer of a monomer such as polymerizable monofunctional (meth)acrylate having a hydroxyl group; polymerizable monofunctional (meth)acrylate having no hydroxyl group; bifunctional (meth)acrylate; trifunctional or higher functional (meth)acrylate, and a copolymer prepared from the monomers. Moreover, the acrylic resin may be a copolymer in which the monomer is copolymerized with a monomer such as styrene, methylstyrene, chloromethylstyrene, vinyltoluene, N-cyclohexylmaleimide, N-phenylmaleimide, a polystyrene macromonomer, (meth)acrylic acid, crotonic acid, α-chloroacrylic acid, cinnamic acid, maleic acid, fumaric acid, itaconic acid, citraconic acid and mesaconic acid.

"(Meth)acrylate" herein indicates both or either one of acrylate and methacrylate.

Moreover, a case where the number of polymerizable group is one is expressed as "monofunctional, " and a case where the number is two is expressed as "bifunctional." "trifunctional or higher functional" is also expressed based on the number of polymerizable groups.

Specific examples of the polymerizable monofunctional (meth)acrylate having a hydroxyl group include 2-hydroxyethyl (meth)acrylate, 2-hydroxypropyl (meth)acrylate, 4-hydroxybutyl (meth)acrylate, glycerol mono(meth)acrylate and 1,4-cyclohexanedimethanol mono(meth)acrylate. Among types of (meth)acrylate, in view of capability of forming a flexible hardened film to be formed, 4-hydroxy butylacrylate and 1,4-cyclohexane dimethanol monoacrylate are preferred.

Specific examples of the polymerizable monomer having no hydroxyl group include methyl (meth)acrylate, ethyl (meth)acrylate, isopropyl (meth)acrylate, butyl (meth)acrylate, iso-butyl (meth)acrylate, tert-butyl (meth)acrylate, cyclohexyl (meth)acrylate, isobornyl (meth)acrylate, phenyl (meth)acrylate, benzyl (meth)acrylate, tricyclo[5.2.1.0^{2,6}]decanyl (meth)acrylate, dicyclopentenyloxyethyl (meth)acrylate, 5-tetrahydrofurfuryl oxycarbonylpentyl (meth)acrylate, (meth)acrylate of ethylene oxide adduct of lauryl alcohol, ω-carboxypolycaprolactone mono(meth)acrylate, a polymethylmethacrylate macromonomer, mono[2-(meth)acryloyloxyethyl]succinate, mono[2-(meth)acryloyloxyethyl]maleate, mono[2-(meth)acryloyloxyethyl]cyclohexene-3,4-dicarboxylate, N-acryloyl morpholine and (meth)acrylamide.

Specific examples of the bifunctional (meth) acrylate include bisphenol-F ethylene oxide-modified di(meth)acrylate, bisphenol-A ethylene oxide-modified di(meth)acrylate, isocyanuric acid ethylene oxide-modified di(meth)acrylate, polyethylene glycol di(meth)acrylate, polypropylene glycol di(meth)acrylate, pentaerythritol di(meth)acrylate, pentaerythritol di(meth)acrylate monostearate, dipentaerythritol di(meth)acrylate, 1,4-butanediol di(meth)acrylate, 1,6-hexanediol di(meth)acrylate, 1,9-nonanediol di(meth)acrylate, 1,4-cyclohexane dimethanol di(meth)acrylate, 2-n-butyl-2-ethyl-1,3-propandiol di(meth)acrylate and trimethylolpropane di(meth)acrylate.

Specific examples of the trifunctional or higher functional (meth)acrylate include trimethylolpropane tri(meth)acrylate, ethylene oxide-modified trimethylolpropane tri(meth)acrylate, propylene oxide-modified trimethylolpropane tri(meth)acrylate, epichlorohydrin-modified trimethylolpropane tri(meth)acrylate, ditrimethylolpropane tetra(meth)acrylate, glycerol tri(meth)acrylate, epichlorohydrin-modified glycerol tri(meth)acrylate, diglycerol tetra(meth)acrylate, pentaerythritol tri(meth)acrylate, pentaerythritol tetra(meth)acrylate, dipentaerythritol penta(meth)acrylate, alkyl-modified dipentaerythritol penta(meth)acrylate, alkyl-modified dipentaerythritol tetra(meth)acrylate, alkyl-modified dipentaerythritol tri(meth)acrylate, dipentaerythritol hexa(meth)acrylate, caprolactone-modified dipentaerythritol hexa(meth)acrylate, ethylene oxide-modified phosphoric acid tri(meth)acrylate, tris[(meth)acryloxyethyl]isocyanurate, caprolactone-modified tris[(meth)acryloxyethyl]isocyanurate and urethane (meth)acrylate.

The acrylic resin may be used alone in one kind or in combination with two or more kinds.

When the acrylic resin is contained in the composition of the invention, the concentration of the acrylic resin in the composition is not particularly limited, but is preferably in the range of approximately 0.1 to approximately 20% by weight, and further preferably, in the range of approximately 1 to approximately 10% by weight. If the concentration is within the range described above, a hardened film having excellent film flatness, heat resistance and mechanical characteristics is obtained.

### 1-5-4. Surfactant

The composition of the invention may comprise a surfactant in order to improve wettability or levelability onto a coating obj ect such as a substrate, or jettability when performing inkj et printing of the composition of the invention.

In view of allowing improvement of jettability when performing inkjet printing of the composition of the invention, specific examples of the surfactant include a silicone surfactant such as "BYK-300," "BYK-306," "BYK-335," "BYK-310," "BYK-341," "BYK-344" and "BYK-370" (trade names) (BYK-Chemie GmbH); an acrylic surfactant such as "BYK-354," "BYK-358" and "BYK-361" (trade names) (BYK-Chemie GmbH); and a fluorochemical surfactant such as "DFX-18," "Futargent 250" and "Futargent 251" (trade names) (Neos Co., Ltd.).

The surfactant may be used alone in one kind or in combination with two or more kinds.

When the surfactant is contained in the composition of the invention, the concentration of the surfactant in the composition is preferably in the range of approximately 0.01 to approximately 1% by weight.

### 1-5-5. Antistatic agent

The antistatic agent is used in order to prevent the composition of the invention from being charged. Such an antistatic agent is not particularly limited, and a publicly known antistatic agent can be used. Specific examples include a metal oxide such as tin oxide, tin oxide-antimony oxide composite oxide, tin oxide-indium oxide composite oxide and a quaternary ammonium salt.

The antistatic agent may be used alone in one kind or in combination with two or more kinds.

When the antistatic agent is contained in the composition of the invention, the concentration of the antistatic agent in the composition is preferably in the range of approximately 0.01 to approximately 1% by weight.

### 1-5-6. Coupling agent

The coupling agent is not particularly limited, and a publicly known coupling agent can be used. A silane coupling agent is preferably used. Specific examples of the silane coupling agent include a trialkoxysilane compound and a dialkoxysilane compound.

Specific examples of the trialkoxysilane compound or the dialkoxysilane compound include γ-vinylpropyl trimethoxysilane, γ-vinylpropyl triethoxysilane, γ-acryloylpropylmethyl dimethoxysilane, γ-acryloylpropyl trimethoxysilane, γ-acryloylpropylmethyl diethoxysilane, γ-acryloylpropyl triethoxysilane, γ-methacryloylpropylmethyl dimethoxysilane, γ-methacryloylpropyl trimethoxysilane, γ-methacryloylpropylmethyl diethoxysilane, γ-methacryloylpropyl triethoxysilane, γ-aminopropylmethyl dimethoxysilane, γ-aminopropyl trimethoxysilane, γ-aminopropylmethyl diethoxysilane, γ-aminopropyl triethoxysilane, N-aminoethyl-γ-iminopropylmethyl dimethoxysilane, N-aminoethyl-γ-aminopropyl trimethoxysilane, N-aminoethyl-γ-aminopropyl triethoxysilane, N-phenyl-γ-aminopropyl trimethoxysilane, N-phenyl-γ-aminopropyl triethoxysilane, N-phenyl-γ-aminopropylmethyl dimethoxysilane, N-phenyl-γ-aminopropylmethyl diethoxysilane, γ-mercaptopropylmethyl dimethoxysilane, γ-mercaptopropylmethyl diethoxysilane, γ-mercaptopropyl trimethoxysilane, γ-mercaptopropyl triethoxysilane, γ-isocyanatopropylmethyl diethoxysilane and γ-isocyanatopropyl triethoxysilane.

Among of the compounds, γ-vinylpropyl trimethoxysilane, γ-acryloylpropyl trimethoxysilane, γ-methacryloylpropyl trimethoxysilane and γ-isocyanatopropyl triethoxysilane are particularly preferred.

The coupling agent may be used alone in one kind or in combination with two or more kinds.

When the coupling agent is contained in the composition of the invention, the concentration of the coupling agent in the composition is preferably in the range of approximately 0.01 to approximately 3% by weight.

### 1-5-7. Epoxy curing agent

The epoxy curing agent is not particularly limited, and a publicly known epoxy curing agent can be used. Specifically, such a curing agent can be used as an organic acid dihydrazide compound, imidazole and a derivative thereof, dicyandiamides, aromatic amine, polycarboxylic acid and polycarboxylic anhydride.

The polycarboxylic acid is a compound having two or more carboxyl groups in one molecule.

Further specific examples of the epoxy curing agent include dicyandiamides such as dicyandiamide; an organic acid dihydrazide compound such as adipic acid dihydrazide and 1,3-bis(hydrazinocarboethyl)-5-isopropylhydantoin; an imidazole derivative such as 2,4-diamino-6-[2'-ethylimidazolyl-(1')]-ethyltriazine, 2-phenylimidazole, 2-phenyl-4-methylimidazole and 2-phenyl-4-methyl-5-hydroxymethylimidazole; polycarboxylic anhydride such as phthalic anhydride, trimellitic anhydride and 1,2,4-cyclohexanetricarboxylic acid-1,2-anhydride; and polycarboxylic acid such as trimellitic acid. Among the compound, trimellitic anhydride, trimellitic acid and 1,2,4-cyclohexanetricarboxylic acid-1,2-anhydride are preferred.

The epoxy curing agent may be used alone in one kind or in combination with two or more kinds.

When the epoxy curing agent is contained in the composition of the invention, the concentration of the epoxy curing agent in the composition is preferably in the range of approximately 0.2 to approximately 5% by weight.

### 1-6. Physical properties of thermosetting composition, or the like

The composition of the invention comprises components (A) and (B), and therefore a conventional and publicly known coating method such as a solution coating method can be applied without restriction even to the composition having a high solute concentration, and a hardened film can be easily formed.

Consequently, a thick hardened film can be formed even by one-time coating, and an excellent hardened film having a well balance among film flatness, heat resistance, mechanical characteristics and so forth can be formed with good productivity.

Therefore, for example, the solute concentration in the composition of the invention may be increased upon forming a thick hardened film by one-time coating, and the solute concentration in the composition may be decreased when a composition having predetermined low viscosity is required in such a case where the composition of the invention is coated by an inkjet method.

Components (A) and (B) have excellent solubility to a solvent also, and therefore such concentration adjustment can also be easily performed.

As described above, the solute concentration in the composition of the invention may be appropriately determined according to a use, but is preferably approximately 5 to approximately 80% by weight, and further preferably, approximately 10 to approximately 70% by weight.

When the solute concentration in the composition of the invention is in the range described above, an excellent hardened film having a well balance among film flatness, heat resistance, mechanical characteristics and so forth can be easily formed with good productivity using a conventional and publicly known coating method such as the solution coating method.

Moreover, as described above, the viscosity of the composition of the invention may be appropriately adjusted according to a use, and the viscosity is preferably in the range of approximately 2 to approximately 20,000 mPa·s, and further preferably, in the range of approximately 5 to approximately 15,000 mPa·s.

When the viscosity is within the range described above, a hardened film can be easily formed with good productivity using a conventional and publicly known coating method such as the solution coating method.

When ordinary usage is taken into consideration, the composition of the invention desirably causes neither precipitation nor separation in the composition for approximately 3 days or more, and preferably, approximately 7 days or more under room temperature.

### 2. Hardened film

The hardened film of the invention can be obtained by hardening the composition of the invention.

A method for manufacturing such a hardened film is not particularly restricted. However, in view of capability of forming an excellent hardened film having a well balance among film flatness, heat resistance, mechanical characteristics and so forth, a method is preferred for forming a coating film by coating the composition of the invention onto a substrate or the like (coating film-forming step), and the resultant film is subjected to drying treatment (drying step) and heat treatment (heating step).

### 2-1. Coating film-forming step

A method for coating the composition of the invention onto a substrate is not particularly restricted, and a publicly known coating method can be appropriately selected and applied according to required thickness of the hardened film, required viscosity of the composition, or the like. Specific examples include a coating method using an applicator, a doctor blade knife coater, an air-knife coater, a roll coater, a rotary coater, a flow coater, a die coater, and a bar coater, a coating methods such as a spin coating method, a spray coating method and a dip coating method, and a printing technique typified by inkjet printing, screen printing or gravure printing.

Specific examples of the substrate on which the composition is coated include a glass epoxy substrate, a glass composite substrate, a paper phenol substrate, a paper epoxy substrate, a green epoxy substrate, and a bismaleimide triazine (BT) resin substrate in conformity with various standards of printed circuit boards, such as FR-1, FR-3, FR-4, CEM-3 or E668.

Furthermore, the specific examples include a substrate including a metal such as copper, brass, phosphor bronze, copper-beryllium alloy, aluminum, gold, silver, nickel, tin, chromium or stainless steel (a substrate may have a layer including any one of the metals on a surface); a substrate including an inorganic substance such as aluminum oxide (alumina), aluminum nitride, zirconium oxide (zirconia), silicate of zirconium (zircon), magnesium oxide (magnesia), aluminum titanate, barium titanate, lead titanate (PT), lead zirconate titanate (PZT), lead lanthanum zirconium titanate (PLZT), lithium niobate, lithium tantalate, cadmium sulfide, molybdenum sulfide, beryllium oxide (beryllia), silicon oxide (silica), silicon carbide, silicon nitride, boron nitride, zinc oxide, mullite, ferrite, steatite, forsterite, spinel or spodumene (a substrate may have a layer including any one of the inorganic substances on the surface); a substrate including a resin such as polyphenylene sulfide (PPS) resin, polyphenylene ether resin, polyimide resin, polyamide resin, polyether imide resin, polyamide imide resin and epoxy resin (a substrate may have a layer including any one of the resins on the surface); a semiconductor substrate (e.g. silicon wafer) including silicon, germanium or gallium arsenide; a glass substrate; and a substrate prepared by forming an electrode material (wiring) such as tin oxide, zinc oxide, indium tin oxide (ITO) or antimony tin oxide (ATO) on the surface.

The hardened film of the invention is preferably formed on the substrate including the polyimide resin described above and on the silicon wafer, particularly, a film-shaped substrate including the polyimide resin, and on the silicon wafer.

### 2-2. Drying step

The drying step is applied for the purpose of removing a solvent and providing the coating film with characteristics, and flatness of the coating film after the heating step.

In order to obtain an excellent hardened film having a well balance among film flatness, heat resistance, mechanical characteristics and so forth, temperature and time in the drying step are preferably approximately 50 to approximately 120°C, and preferably approximately 10 to approximately 100 minutes on using an oven, and approximately 10 to approximately 80 minutes on using a hot plate.

### 2-3. Heating step

The heating step is applied for the purpose of removing a solvent remaining after the drying step, eliminating a component derived from compound (a2) from component (A) in the coating film and evaporating the component to form an imide bond by a reaction of component (A) with component (B), and depending on carboxylic anhydride (a1) to be used, promoting a crosslinking reaction on a thermo-reactive unsaturated bond site to manufacture the hardened film, or the like.

For a reason similar to the reason in the drying step, temperature and time in the heating step are preferably approximately 200 to approximately 450°C, and further preferably, approximately 250 to approximately 400°C, and preferably approximately 30 to approximately 200 minutes on using an oven.

Thickness of the hardened film obtained may be appropriately adjusted according to desired use, but is preferably approximately 1 to approximately 200 micrometers, and further preferably, approximately 1 to approximately 150 micrometers. The composition of the invention has low viscosity and excellent storage stability even if the solute concentration is increased, and therefore a thicker hardened film, in comparison with a film formed from a conventional composition, can be easily formed with good productivity.

### 2-4. Physical properties of a hardened film, or the like

The hardened film of the invention is obtained by hardening the composition of the invention, and therefore is excellent in having a well balance among film flatness, heat resistance, mechanical characteristics and so forth. The hardened film of the invention contains preferably polyimide (polymer having a plurality of imide groups). On the occasion, the hardened film has the characteristics described above, and also characteristics equivalent to or superior to the characteristics of a conventional polyimide film, such as electrical characteristics including withstand voltage, a dielectric constant and a dielectric loss, mechanical characteristics including a bending test, an elastic modulus and tensile elongation, chemical stability including acid resistance, alkali resistance and plating resistance, and thermal characteristics including a thermal decomposition temperature, a glass transition temperature and a coefficient of thermal expansion.

Consequently, the hardened film of the invention can be suitably used as an insulating film or a protective film for an electronic component, or the like.

A high 5% weight reduction temperature of the hardened film of the invention is preferred, and when the hardened film is used in an electronics and communication field, particularly, for a semiconductor device, the 5% weight reduction temperature is preferably approximately 450°C or higher, and further preferably, approximately 460°C or higher in view of difficulty in generating an outgas from the hardened film upon the use in the field.

A high glass transition temperature of the hardened film of the invention is preferred, and the glass transition temperature is preferably approximately 250°C or higher, and further preferably, in the range of approximately 260 to approximately 600 °C in view of obtaining a stable hardened film in various uses.

When the hardened film of the invention is used as an insulating film, the hardened film preferably has approximately same coefficient of thermal expansion comparable with the coefficient of the support in view of difficulty in causing a crack on the hardened film, and difficulty in causing peeling from a support by thermal stress upon using the hardened film on the support.

Therefore, the coefficient of thermal expansion may be appropriately adjusted according to the support to be used, but when the hardened film is used in an electronics and communication field, the coefficient of thermal expansion is ordinarily approximately 80 ppm/°C or less, and further preferably, approximately 70 ppm/°C or less.

The coefficient of thermal expansion of the hardened film of the invention can be adjusted by appropriately selecting components (A) and (B) to be used.

### 3. Electronic component

An electronic component of the invention has the hardened film of the invention. Specific examples of such an electronic component include a substrate for an electronic material, more specifically, a film substrate and a semiconductor wafer substrate.

Specific examples of the film substrate include a substrate obtained by coating the composition of the invention on a film-shaped substrate such as a polyimide film on which wiring is formed in advance by an inkjet printing method or the like to form a coating film, and then hardening the coating film by drying and heating.

The following examples are for illustrative purposes only and are not intended, nor should they be interpreted to, limit the scope of the invention.

### Examples

Hereinafter, the invention will be explained by way of Examples and Comparative Examples, but the invention is in no way limited to the Examples.

Names of reaction raw materials and solvents to be used in Examples and Comparative Examples are expressed using abbreviations. The abbreviations are used for descriptions in the following.

### Carboxylic anhydride (a1)

ODPA: 3,3',4,4'-diphenyl ether tetracarboxylic dianhydride
PMDA: pyromellitic dianhydride
s-BPDA: 3,3',4,4'-biphenyl tetracarboxylic dianhydride
4-EPA: 4-ethynyl phthalic anhydride
PTCDA: perylene tetracarboxylic dianhydride

### Compound (a2)

ECa: ethylcarbitol

### OH group-containing compound

MeOH: methanol
EHeOH: 2-ethyl-1-hexanol
CS-12 (trade name, JNC Corporation): a mixture of 3-hydroxy-2,2,4-trimethylpentyl isobutyrate and 2,2,4-trimethyl-1,3-pentanediol-3-monoisobutyrate

### Diamine (B)

BAPP: 2,2-bis[4-(4-aminophenoxy)phenyl]propane
DDE: 4,4'-diaminodiphenyl ether
HFBAPP: 2,2-bis[4-(4-aminophenoxy)phenyl]hexafluoropropane
TPE-R: 1,3-bis(4-aminophenoxy)benzene
DDS: 3,3'-diaminodiphenylsulfone
BAPS-M: bis[4-(3-aminophenoxy)phenyl]sulfone
DMB: 3,3'-dimethoxybenzidine

### Solvent (C)

EDM: diethylene glycol ethyl methyl ether
GBL: γ-butyrolactone

### Example 1

Into a 50 mL reaction vessel equipped with a thermometer, a stirrer, a raw material charging inlet and a nitrogen gas inlet, ODPA (2.1521 g) as (a1) and ECa (7.5 g) as (a2) were charged, and the resultant mixture in the reaction vessel was stirred at 130 °C for 4 hours in an oil bath, and thus a uniform liquid was obtained. Then, the resultant liquid was further stirred at 130°C for 1 hour, and thus carboxylic acid ester (A) was obtained. Next, the reaction vessel was removed from the oil bath and cooled to room temperature. Then, BAPP (2.8479 g) as (B) and EDM (7.5 g) as (C) were added thereto, and the resultant mixture was stirred until a uniform solution was formed, and thus a thermosetting composition was obtained. Evaluations (1) to (6) described below were performed using the composition.

### Examples 2 to 12

A thermosetting composition was prepared under conditions identical with the conditions in Example 1 except that a raw material presented in Table 1 was used, and evaluations (1) to (6) described below were performed.

### Comparative Example 1

Into a 50 mL flask equipped with a thermometer, a stirrer, a raw material charging inlet and a nitrogen gas inlet, ODPA (2.1521 g) as (a1), BAPP (2.8479 g) as (B) and EDM (15 g) as (C) were charged, and the resultant mixture was stirred at room temperature for 1 hour. Then, when an inside of the flask was confirmed, a polymer component precipitated in the solution, and was insoluble, and therefore a future evaluation was given up.

### Comparative Example 2

Into a 50 mL flask equipped with a thermometer, a stirrer, a raw material charging inlet and a nitrogen gas inlet, GBL (22.5 g) as (C) and BAPP (1.42395 g) as (B) were charged, and the resultant mixture was stirred and dissolved at room temperature for 1 hour, and then cooled to 4°C with ice water. When ODPA (1.0761 g) as (a1) was added thereto, heat generation of approximately 10°C was observed. Upon completion of heat generation, the flask was removed from ice water, and the resultant mixture was stiffed for 3 hours at room temperature, and thus a thermosetting composition was obtained. Evaluations (1) to (6) described below were performed using the composition. However, after two days from preparation, white turbidity of the composition started, and storage stability was poor.

### Comparative Example 3

A raw material presented in Table 2 was used in a synthesis of carboxylic acid ester (A) in Example 1, and temperature of an oil bath was regulated at 70°C, and the resultant mixture was stirred for 24 hours in a manner similar to the operations in Example 1. However, ODPA did not dissolve in MeOH, and a future evaluation was given up.

### Comparative Example 4

A composition was prepared under conditions similar to the conditions in Example 1 except that a raw material presented in Table 2 was used. However, a precipitate was produced in the flask on the next day, and a future evaluation was given up.

### Comparative Example 5

A raw material presented in Table 2 was used in a synthesis of carboxylic acid ester (A) in Example 1, and the resultant mixture was stirred for 24 hours in a manner similar to the operations in Example 1. However, ODPA did not dissolve in CS-12, and a future evaluation was given up.

### Comparative Example 6

A raw material presented in Table 2 was used in a synthesis of carboxylic acid ester (A) in Example 1, and the resultant mixture was stirred for 24 hours in a manner similar to the operations in Example 1. However, PTCDA did not dissolve in EHeOH, and a future evaluation was given up.

### Evaluation method

Evaluation methods applied in Examples and Comparative Examples are described below.

### (1) Viscosity (mPa·s)

Viscosity of a thermosetting composition was measured at 25°C using a cone-plate (E-type) viscometer (trade name: TV-22, made by Toki Sangyo Co., Ltd.).

### (2) Storage stability at room temperature

Storage stability at room temperature of a thermosetting composition was evaluated. A state of the thermosetting composition after the elapse of 7 days under room temperature was observed. A stable thermosetting composition in which formation of an insoluble matter was not confirmed even on storage at room temperature was evaluated to be good, and a turbid thermosetting composition or a thermosetting composition in which confirmation was allowed for generation of an insoluble matter such as gelated matter upon storage at room temperature was evaluated to be bad.

### (3) Film flatness

A thermosetting composition was coated on a base material (aluminum foil) using an applicator, and the resultant coated material was dried at 50°C for 30 minutes and then at 80°C for 30 minutes using a hot plate. Furthermore, the base material with the coating film obtained was put into an oven, and when the thermosetting composition obtained in Example 1 was used, the film was heated at 250°C for 120 minutes, or when the thermosetting compositions obtained in Examples 2 to 12 were used, the films were heated at 200°C for 30 minutes, and then heated at 400°C for 30 minutes, or when the thermosetting composition obtained in Comparative Example 2 was used, the film was heated at 200°C for 30 minutes, and then heated at 300°C for 30 minutes, and thus a base material with a hardened film (film thickness: 50 µm) was formed. With regard to film flatness, a hardened film surface of the base material with the hardened film obtained was visually observed, and a uniform film without swelling or unevenness was evaluated to be good.

### (4) 5% weight reduction temperature

A base material with a hardened film was prepared in a manner similar to the operations upon evaluating film flatness, the hardened film was peeled off from the base material with the hardened film obtained, and cut into 3 mm long and 3 mm wide piece. A plurality pieces of cut hardened films were stacked to be approximately 10 mg in the total weight, put into a sample container (aluminum pan), and a 5% weight reduction temperature of the hardened film was measured using the sample container obtained and Differential Scanning Calorimeter (SSC5200, manufactured by Seiko Instruments Inc.).
Measuring conditions are as described below.
Temperature rise starting temperature: 30°C.
Temperature rise finish temperature: 600°C.
Rate of temperature rise: 10°C/min.
Atmosphere: in air.

### (5) Glass transition temperature

A base material with a hardened film was prepared in a manner similar to the operations upon evaluating film flatness, the hardened film was peeled off from the base material with the hardened film obtained, and cut into 23 mm long and 5 mm wide piece, and then a glass transition temperature of the hardened film was measured using Dynamic Mechanical Spectrometer (DMS 6100, made by Seiko Instruments Inc.).
Measuring conditions are as described below.
Temperature rise starting temperature: 30°C.
Temperature rise finish temperature: 600°C.
Rate of temperature rise: 10°C/min.
Atmosphere: in air.

### (6) Coefficient of thermal expansion

A base material with a hardened film was prepared in a manner similar to the operations upon evaluating film flatness, the hardened film was peeled off from the base material with the hardened film obtained, and cut into 10 mm long and 3 mm wide piece, and then a coefficient of thermal expansion of the hardened film was measured using Thermomechanical Analyzer (TMA/SS6100, made by Seiko Instruments Inc.).
Measuring conditions are as described below.
Temperature rise starting temperature: 30°C.
Temperature rise finish temperature: 300°C.
Rate of temperature rise: 10°C/min.
Atmosphere: in air.
Calculation of a coefficient of thermal expansion: 50 to 125°C (first scan).

Results of evaluation in Examples and Comparative Examples as described above are presented in Table 1 or Table 2.

**Table 1**

| Example | A | | | B | | C | Solute concentration (wt%) | Viscosity (mPa·s) | Storage stability | Film flatness | 5% weight reduction temperature (°C) | Glass transition temperature (°C) | Coefficient of thermal expansion (ppm/°C) |
|---|---|---|---|---|---|---|---|---|---|---|---|---|---|
| | a1 | | a2 | | | | | | | | | | |
| 1 | ODPA 2.1521 g | | Eca 7.5g | BAPP 2.8479 g | | EDM 7.5 g | 25 | 13.2 | Good | Good | 519 | 261 | 57 |
| 2 | ODPA 4.3042g | | Eca 15g | BAPP 5.6958 g | | | 40 | 303.0 | Good | Good | 481 | 340 | 41 |
| 3 | ODPA 2.1521 g | | Eca 7.5g | BAPP 2.8479 g | | EDM 7.5 g | 25 | 13.2 | Good | Good | 481 | 340 | 41 |
| 4 | ODPA 3.0387g | | Eca 7.5g | DDE 1.9613 g | | EDM 7.5 g | 25 | 19.8 | Good | Good | 545 | 304 | 33 |
| 5 | ODPA 1.8718g | | Eca 7.5g | HFBAPP 3.1282 g | | EDM 7.5 g | 25 | 11.4 | Good | Good | 526 | 273 | 47 |
| 6 | ODPA 2.5742g | | Eca 7.5g | TPE-R 2.4258 g | | EDM 7.5 g | 25 | 14.9 | Good | Good | 545 | 263 | 41 |
| 7 | PMDA 2.3382g | | Eca 7.5g | DDS 2.6618 g | | EDM 7.5 g | 25 | 17.0 | Good | Good | 530 | 310 | 35 |
| 8 | s-BPDA 1.8102g | | Eca 7.5g | HFBAPP 3.1898 g | | EDM 7.5 g | 25 | 11.7 | Good | Good | 523 | 298 | 59 |
| 9 | s-BPDA 2.0243g | | Eca 7.5g | BAPS-M 2.9757 g | | EDM 7.5 g | 25 | 12.4 | Good | Good | 530 | 299 | 38 |
| 10 | ODPA 0.9171 g | 4-EPA 1.0177g | Eca 7.5g | HFBAPP 3.0652 g | | EDM 7.5 g | 25 | 10.5 | Good | Good | 511 | 360 | 55 |
| 11 | s-BPDA 0.8781 g | 4-EPA 1.0275g | Eca 7.5g | HFBAPP 3.0945 g | | EDM 7.5 g | 25 | 11.1 | Good | Good | 512 | 391 | 47 |
| 12 | 4-EPA 2.3722g | | Eca 7.5g | HFBAPP 1.7862g | DMB 0.8416g | EDM 7.5 g | 25 | 12.0 | Good | Good | 469 | 505 | 46 |

**Table 2**

| Comparative Example | A | | B | C | Solute concentration (wt%) | Viscosity (mPa·s) | Storage stability | Film flatness | 5% weight reduction temperature (°C) | Glass transition temperature (°C) | Coefficient of thermal expansion (ppm/°C) |
|---|---|---|---|---|---|---|---|---|---|---|---|
| | a1 | OH-containing compound | | | | | | | | | |
| 1 | ODPA 2.1521g | - | BAPP 2.8479g | EDM 15g | 25 | - | - | - | - | - | - |
| 2 | ODPA 1.0761g | - | BAPP 1.42395g | GBL 22.5g | 10 | 6,000 | Bad | Good | 480 | 285 | 55 |
| 3 | ODPA 2.1521g | MeOH 7.5g | - | - | - | - | - | - | - | - | - |
| 4 | ODPA 2.1521g | EHeOH 7.5g | BAPP 2.8479g | EDM 7.5g | 25 | 13.6 | Bad | - | - | - | - |
| 5 | ODPA 2.1521g | CS-12 7.5g | - | - | - | - | - | - | - | - | - |
| 6 | PTCDA 2.7217g | EHeOH 7.5g | - | - | - | - | - | - | - | - | - |

As is clear from the results in Examples and Comparative Examples as described above, the thermosetting compositions obtained in Examples 1 to 12 forms no insoluble matter in storage at room temperature at least for 7 days, and can be stably stored. In Examples 1 to 12, the carboxylic acid ester (A) and the thermosetting composition are easily manufactured. Even when the compositions obtained in Examples 1 to 12 have a solute concentration of 40% by weight, a conventional and publicly known coating method can be applied, and storage stability is excellent.

Hardened film surfaces formed from the compositions obtained in Examples 1 to 12 was uniform, and neither swelling nor unevenness was observed.

Moreover, the hardened films formed from the compositions obtained in Examples 1 to 12 have a 5% weight reduction temperature and a glass transition temperatures exceeding 450°C and 250°C, respectively, and a coefficient of thermal expansion of 80 ppm/°C or less, and the hardened films are found to have characteristics as an insulating film in an electronics and communication field.

As is clear from the results in Examples as described above, the thermosetting composition of the invention has low viscosity and excellent storage stability even when the solute concentration is high, and an excellent hardened film having a well balance among coating film flatness, heat resistance, mechanical characteristics and so forth can be obtained therefrom.

### Industrial Applicability

A thermosetting composition of the invention can be suitably used, for example, for an insulating film for a printed circuit board and an insulating film for a semiconductor device, and also as a material for forming an electronic component.

## Claims

1. A thermosetting composition comprising a compound (A) and a compound (B), wherein compound (A) is a carboxylic acid ester having at least one group represented by formula (1) : 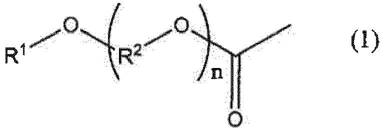
wherein, in formula (1), R¹ is alkyl having 1 to 10 carbons,
R² is independently alkylene having 2 or 3 carbons, and
n is an integer from 1 to 3; and compound (B) is a diamine which is at least one kind of compound selected from the group of 3,3'-diaminodiphenylsulfone, 4,4'-diaminodiphenyl ether, bis[4-(3-aminophenoxy)phenyl]sulfone, 3,3'-diaminodiphenylmethane, 4,4'-diaminodiphenylmethane, 2,2'-diaminodiphenylpropane, 3,3'-dimethyl-4,4'-diaminodiphenylmethane, 2,2-bis[4-(4-aminophenoxy)phenyl]propane, 2,2-bis[4-(4-aminophenoxy)phenyl]hexafluoropropane, m-phenylenediamine, p-phenylenediamine, m-xylylenediamine, p-xylylenediamine, benzidine, 1,1-bis[4-(4-aminophenoxy)phenyl]cyclohexane, 1,1-bis[4-(4-aminophenoxy)phenyl]-4-methylcyclohexane, 1,1-bis[4-(4-aminobenzyl)phenyl]cyclohexane, 1,1-bis[4-(4-aminobenzyl)phenyl]-4-methylcyclohexane, 1,1-bis[4-(4-aminobenzyl)phenyl]methane, 1,3-bis(4-aminophenoxy)benzene, 3,3'-dimethoxybenzidine and 3,3'-dihydroxybenzidine.

2. The thermosetting composition according to claim 1, wherein carboxylic acid ester (A) is obtained by allowing a carboxylic anhydride (a1) to react with a compound (a2) represented by formula (2): 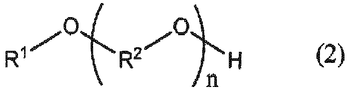
wherein, in formula (2), R¹ is alkyl having 1 to 10 carbons,
R² is independently alkylene having 2 or 3 carbons, and
n is an integer from 1 to 3.

3. The thermosetting composition according to claim 2, wherein carboxylic anhydride (a1) is at least one kind of compound selected from the group of a tetracarboxylic anhydride and a dicarboxylic anhydride having a thermo-reactive unsaturated bond.

4. The thermosetting composition according to claim 2 or 3, wherein carboxylic anhydride (a1) is at least one kind of compound selected from the group of 3,3',4,4'-biphenyl tetracarboxylic dianhydride, pyromellitic dianhydride, 3,3',4,4'-benzophenone tetracarboxylic dianhydride, 2,2',3,3'-benzophenone tetracarboxylic dianhydride, 2,3,3',4'-benzophenone tetracarboxylic dianhydride, 3,3',4,4'-diphenylsulfone tetracarboxylic dianhydride, 2,2',3,3'-diphenylsulfone tetracarboxylic dianhydride, 2,3,3',4'-diphenylsulfone tetracarboxylic dianhydride, 3,3',4,4'-diphenylether tetracarboxylic dianhydride, 2,2',3,3'-diphenylether tetracarboxylic dianhydride, 2,3,3',4'-diphenylether tetracarboxylic dianhydride, 2,2-[bis(3,4-dicarboxyphenyl)]hexafluoropropane dianhydride, ethyleneglycol bis(anhydrotrimellitate), 4,4'-[(isopropylidene)bis(p-phenyleneoxy)]diphthalic dianhydride, cyclobutane tetracarboxylic dianhydride, methylcyclobutane tetracarboxylic dianhydride, cyclopentane tetracarboxylic dianhydride, 1,2,4,5-cyclohexane tetracarboxylic dianhydride, ethane tetracarboxylic dianhydride, butane tetracarboxylic dianhydride, 3,3',4,4'-bicyclohexyl tetracarboxylic dianhydride, 4-ethynyl phthalic anhydride and 4-phenylethynyl phthalic anhydride.

5. The thermosetting composition according to any one of claims 1 to 4, further comprising a solvent (C).

6. A hardened film, obtained by hardening the thermosetting composition according to any one of claims 1 to 5.

7. An electronic component having the hardened film according to claim 6.

## Patentansprüche

1. Duroplast-Zusammensetzung, umfassend eine Verbindung (A) und eine Verbindung (B), wobei Verbindung (A) ein Carbonsäureester mit zumindest einer Gruppe der Formel (1) ist: 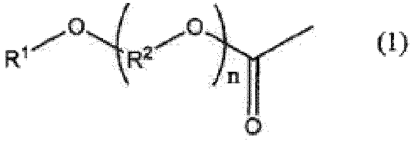
wobei R¹ in Formel (1) ein Alkyl mit 1 bis 10 Kohlenstoffen ist, R² unabhängig Alkylen mit 2 oder 3 Kohlenstoffen ist und n eine ganze Zahl von 1 bis 3 ist;
und Verbindung (B) ein Diamin ist, das zumindest eine Art von Verbindung ist, die aus der Gruppe aus 3,3'-Diaminodiphenylsulfon, 4,4'-Diaminodiphenylether, Bis[4-(3-aminophenoxy)phenyl]sulfon, 3,3'-Diaminodiphenylmethan, 4,4'-Diaminodiphenyl-methan, 2,2'-Diaminodiphenylpropan, 3,3'-Dimethyl-4,4'-diaminodiphenylmethan, 2,2-Bis[4-(4-aminophenoxy)phenyl]propan, 2,2-Bis[4-(4-(4-aminophenoxy)phenyl]-hexafluorpropan, m-Phenylendiamin, p-Phenylendiamin, m-Xylylendiamin, p-Xylylendiamin, Benzidin, 1,1-Bis[4-(4-aminophenoxy)phenyl]cyclohexan, 1,1-Bis[4-(4-amino-phenoxy)phenyl]-4-methylcyclohexan, 1,1-Bis[4-(4-aminobenzyl)phenyl]cyclohexan, 1,1-Bis[4-(4-aminobenzyl)phenyl]-4-methylcyclohexan, 1,1-Bis[4-(4-aminobenzyl)-phenyl]methan, 1,3-Bis(4-aminophenoxy)benzol, 3,3'-Dimethoxybenzidin und 3,3'-Dihydroxybenzidin ausgewählt ist.

2. Duroplast-Zusammensetzung nach Anspruch 1, wobei der Carbonsäureester (A) erhalten wird, indem ein Carbonsäureanhydrid (a1) mit einer Verbindung (a2) der Formel (2) reagieren gelassen wird: 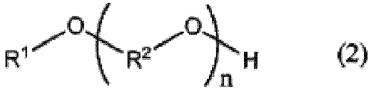 wobei R¹ in Formel (2) ein Alkyl mit 1 bis 10 Kohlenstoffen ist, R² unabhängig Alkylen mit 2 oder 3 Kohlenstoffen ist und n eine ganze Zahl von 1 bis 3 ist.

3. Duroplast-Zusammensetzung nach Anspruch 2, wobei das Carbonsäureanhydrid (a1) zumindest eine Art von Verbindung ist, die aus der Gruppe aus einem Tetracarbonsäureanhydrid und einem Dicarbonsäureanhydrid mit einer thermoreaktiven ungesättigten Bindung ausgewählt ist.

4. Duroplast-Zusammensetzung nach Anspruch 2 oder 3, wobei das Carbonsäureanhydrid (a1) zumindest eine Art von Verbindung ist, die aus der Gruppe aus 3,3',4,4'-Biphenyltetracarbonsäuredianhydrid, Pyromellitsäuredianhydrid, 3,3',4,4'-Benzophenontetracarbonsäuredianhydrid, 2,2',3,3'-Benzophenontetracarbonsäuredianhydrid, 2,2',3',4'-Benzophenontetracarbonsäuredianhydrid, 2,3,3',4'-Benzophenontetracarbonsäuredianhydrid, 3,3',4,4'-Diphenylsulfontetracarbonsäuredianhydrid, 2,2',3,3'-Diphenylsulfontetracarbonsäuredianhydrid, 2,3,3',4'-Diphenylsulfontetracarbonsäuredianhydrid, 3,3',4,4'-Diphenylethertetracarbonsäuredianhydrid, 2,2',3,3'-Diphenylethertetracarbonsäuredianhydrid, 2,3,3',4'-Diphenylethertetracarbonsäuredianhydrid, 2,2-[Bis(3,4-dicarboxyphenyl)]hexafluorpropandianhydrid, Ethylenglykol-bis(anhydrotrimellitat), 4,4'-[(Isopropyliden)bis(p-phenylenoxy)]diphthalsäuredianhydrid, Cyclobutantetracarbonsäuredianhydrid, Methylcyclobutantetracarbonsäuredianhydrid, Cyclopentantetracarbonsäuredianhydrid, Methylcyclobutantetracarbonsäuredianhydrid, Cyclopentantetracarbonsäuredianhydrid, 1,2,4,5-Cyclohexantetracarbonsäuredianhydrid, Ethantetracarbonsäuredianhydrid, Butantetracarbonsäuredianhydrid, 3,3',4,4'-Bicyclohexyltetracarbonsäuredianhydrid, 4-Ethinylphthalsäureanhydrid und 4-Phenylethinylphthalsäureanhydrid ausgewählt ist.

5. Duroplast-Zusammensetzung nach einem der Ansprüche 1 bis 4, die weiters ein Lösungsmittel (C) umfasst.

6. Gehärteter Film, der durch Härten einer Duroplast-Zusammensetzung nach einem der Ansprüche 1 bis 5 erhalten wird.

7. Elektronische Komponente, die einen gehärteten Film nach Anspruch 6 aufweist.

## Revendications

1. Composition thermodurcissable comprenant un composé (A) et un composé (B), dans laquelle le composé (A) est un ester d'acide carboxylique ayant au moins un groupe représenté par la formule (1) : 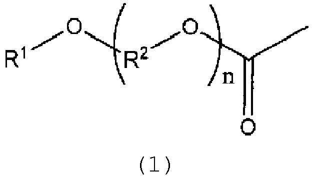 où, dans la formule (1), R¹ est un alkyle ayant 1 à 10 carbones, R² est indépendamment un alkylène ayant 2 ou 3 carbones, et n est un entier de 1 à 3 ; et le composé (B) est une diamine qui est au moins un type de composé choisi dans l'ensemble comprenant le 3,3'-diaminodiphénylsulfone, le 4,4'-diaminodiphényléther, la bis[4-(3-aminophénoxy)phényl]sulfone, le 3,3'-diaminodiphénylméthane, le 4,4'-diaminodiphénylméthane, le 2,2'-diaminodiphénylpropane, le 3,3'-diméthyl-4,4'-diaminodiphénylméthane, le 2,2-bis[4-(4-aminophénoxy)phényl]propane, le 2,2-bis[4-(4-aminophénoxy)phényl]hexafluoropropane, la m-phénylènediamine, la p-phénylènediamine, la m-xylylènediamine, la p-xylylènediamine, la benzidine, le 1,1-bis[4-(4-aminophénoxy)phényl]cyclohexane, le 1,1-bis[4-(4-aminophénoxy)phényl]-4-méthylcyclohexane, le 1,1-bis[4-(4-aminobenzyl)phényl]cyclohexane, le 1,1-bis[4-(4-aminobenzyl)phényl]-4-méthylcyclohexane, le 1,1-bis[4-(4-aminobenzyl)phényl]méthane, le 1,3-bis(4-aminophénoxy)benzène, la 3,3'-diméthoxybenzidine, et la 3,3'-dihydroxybenzidine.

2. Composition thermodurcissable selon la revendication 1, dans laquelle l'ester d'acide carboxylique (A) est obtenu par l'opération consistant à laisser un anhydride carboxylique (a1) réagir avec un composé (a2) représenté par la formule (2) 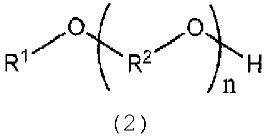 où, dans la formule (2), R¹ est un alkyle ayant 1 à 10 carbones, R² est indépendamment un alkylène ayant 2 ou 3 carbones, et n est un entier de 1 à 3.

3. Composition thermodurcissable selon la revendication 2, dans laquelle l'anhydride carboxylique (a1) est au moins un type de composé choisi dans l'ensemble comprenant un anhydride tétracarboxylique et un anhydride dicarboxylique ayant une liaison insaturée thermo-réactive.

4. Composition thermodurcissable selon la revendication 2 ou 3, dans laquelle l'anhydride carboxylique (a1) est au moins un type de composé choisi dans l'ensemble comprenant le dianhydride 3,3',4,4'-biphényltétracarboxylique, le dianhydride pyromellitique, le dianhydride 3,3',4,4'-benzophénonetétracarboxylique, le dianhydride 2,2',3,3'-benzophénonetétracarboxylique, le dianhydride 2,3,3',4'-benzophénonetétracarboxylique, le dianhydride 3,3',4,4'-diphénylsulfonetétracarboxylique, le dianhydride 2,2',3,3'-diphénylsulfonetétracarboxylique, le dianhydride 2,3,3',4'-diphénylsulfonetétracarboxylique, le dianhydride 3,3',4,4'-diphényléthertétracarboxylique, le dianhydride 2,2',3,3'-diphényléthertétracarboxylique, le dianhydride 2,3,3',4'-diphényléthertétracarboxylique, le dianhydride de 2,2-[bis(3,4-dicarboxyphényl)]hexafluoro-propane, le bis(anhydrotrimellitate) d'éthylèneglycol, le dianhydride 4,4'-[(isopropylène)bis(p-phénylène-oxy)diphtalique, le dianhydride cyclobutanetétracarboxylique, le dianhydride méthylcyclobutanetétracarboxylique, le dianhydride cyclopentanetétracarboxylique, le dianhydride 1,2,4,5-cyclohexanetétracarboxylique, le dianhydride éthanetétracarboxylique, le dianhydride butanetétracarboxylique, le dianhydride 3,3',4,4'-bicyclohexyltétracarboxylique, l'anhydride 4-éthynylphtalique et l'anhydride 4-phényléthynylphtalique.

5. Composition thermodurcissable selon l'une quelconque des revendications 1 à 4, comprenant en outre un solvant (C).

6. Film durci obtenu par durcissement de la composition thermodurcissable selon l'une quelconque des revendications 1 à 5.

7. Composant électronique ayant le film durci selon la revendication 6.
